# EUROPÄISCHE PATENTSCHRIFT

(11) **EP 3 250 341 B1**
(45) Veröffentlichungstag und Bekanntmachung des Hinweises auf die Patenterteilung: **15.07.2020**
(21) Anmeldenummer: 16702695.4
(22) Anmeldetag: 29.01.2016
(51) Int. Cl.: B23Q 1/70, B23Q 3/157, B23Q 39/02

(54) **VERFAHREN, INSBESONDERE ZUM EFFIZIENTEREN UND FLEXIBLEN HERSTELLEN VON BEARBEITUNGSMUSTERN MITTELS MEHRERER SPINDELN**
METHOD, IN PARTICULAR FOR THE EFFICIENT AND FLEXIBLE PRODUCTION OF MACHINING PATTERNS BY MEANS OF A NUMBER OF SPINDLES
PROCÉDÉ, EN PARTICULIER DE FABRICATION FLEXIBLE PLUS EFFICACE DE MODÈLES D'USINAGE AU MOYEN DE PLUSIEURS AXES

(30) Priorität: 30.01.2015 DE 102015001061
(43) Veröffentlichungstag der Anmeldung: 06.12.2017
(73) Patentinhaber: Demmeler Automatisierung und Roboter GmbH, 87751 Heimertingen (DE)
(72) Erfinder: DEMMELER, Johannes, 87751 Heimertingen (DE)
(74) Vertreter: MERH-IP Matias Erny Reichl Hoffmann Patentanwälte PartG mbB
(86) Internationale Anmeldenummer: PCT/EP2016/051992
(87) Internationale Veröffentlichungsnummer: WO 2016/120477

(56) Entgegenhaltungen:
- EP-A2- 2 650 080
- DE-A1-102006 028 972
- DE-A1-102008 033 530

## Beschreibung

Das hier beschriebene Verfahren ermöglicht es beispielsweise, dass Bohrungen entlang/auf eines/einem Radius oder eines/einem Kreis(-bohrmusters bzw. Lochkreises) hocheffizient und schneller als bis dato möglich hergestellt werden können. Der Lochkreis, auf dem die Bohrungen angeordnet werden können, kann Durchmesser von mehreren Metern aufweisen, wie dies beispielsweise bei der Herstellung von Rotornaben von Windkraftturbinen notwendig ist.

Im Stand der Technik sind Werkzeugmaschinen mit Mehrspindelbearbeitungsköpfen bekannt, die linear angeordnete Bearbeitungsmuster abarbeiten können. Die DE102006028972 A1 beschreibt eine Spindeleinheit, die aufweist: eine in einem eigenen Lagergehäuse um ihre Längsachse drehbar gelagerte Arbeitsspindel, in der eine Aufnahme für Werkzeuge zur Bearbeitung von Werkstücken vorgesehen ist. Über eine Verstelleinheit wird die Arbeitsspindel im Betrieb gegenüber dem Lagergehäuse automatisch und ansteuerbar verstellt. Die EP2650080 A2, worauf der beilegende Anspruch 1 basiert, beschreibt eine Fräsvorrichtung zum Schneiden gewünschter Konturen in ein Werkstück, die umfasst einen Kopf, der sich relativ zu einem Werkstück in einer Schnittrichtung bewegt. Spindeln sind auf dem Kopf zur Drehung um parallele beabstandete Spindel-z-Achsen gelagert und umfassen jeweilige rotierende Schneider. Die DE102008033530 A1 beschreibt eine Vorrichtung für Spannfutter, umfassend eine an ein elektrisches Spannfutter ankoppelbare Eingangswelle, zwei hiervon ausgehende, zueinander parallele Ausgangswellen zum Aufnehmen und Führen entsprechender Werkzeuge sowie eine Einrichtung zum gegenseitigen Ankoppeln der Eingangswelle und der Ausgangswellen.

Es besteht Bedarf für ein Verfahren zum schnelleren und effizienteren Abarbeiten von Bearbeitungsmustern die linear und/oder abweichend davon angeordnet sind. Insbesondere besteht Bedarf für die Möglichkeit des schnelleren und effizienteren Abarbeitens von kreisförmig angeordneten Bearbeitungsmustern, wie z.B. von Bohrungen, die entlang eines Bohrmusters, insbesondere eines Radius' oder Kreises mit großen Abmessungen von bis zu mehreren Metern, angeordnet sind.

Die Aufgabe wird von der Erfindung gemäß dem unabhängigen Patentanspruch gelöst. Weitere bevorzugte Entwicklungen werden von den abhängigen Patentansprüchen beschrieben.

Ein Aspekt des Verfahrens der Erfindung betrifft eine (rechnergestützt) numerisch gesteuerte Werkzeugmaschine bzw. eine CNC-Werkzeugmaschine. Die Werkzeugmaschine kann einen Bearbeitungskopf, bevorzugt ein Bohrkopf, aufweisen, der mit der Werkzeugmaschine, insbesondere einer Z-Achse der Werkzeugmaschine, verbunden sein kann. Die Verbindung zwischen Bearbeitungskopf und der Werkzeugmaschine kann bevorzugt manuell und/oder automatisch wechselbar sein. Weiterhin kann der Bearbeitungskopf zumindest zwei Werkzeugspindeln zur Aufnahme von Werkzeugen aufweisen.

Hier sei angemerkt, dass die Z-Achse rotierbar sein kann bzw. eine Rotationsachse bzw. einen rotativen Freiheitsgrad haben kann, d.h. eine C-Achse integriert haben kann. Ferner kann die Werkzeugmaschine und bevorzugt die Z-Achse entlang einer (z.B. waagrechten) Ebene zwei linear(e) (verfahrbare) Achsen aufweisen, die hier auch als X- und Y-Achse/Richtung bezeichnet sein können. Die (zumindest) beiden linearen Achsen/Richtungen stehen bevorzugt senkrecht aufeinander.

Weiterhin kann die Z-Achse bevorzugt auch entlang einer dritten lineare Achse, die senkrecht auf der von X- und Y-Richtungen aufgespannten Ebene stehen kann, verfahrbar sein, die hier auch als senkrechte Achse (in Z-Richtung; senkrecht zur X-Y-Ebene) bezeichnet werden kann.

Mit anderen Worten kann die Z-Achse zumindest entlang zweier linearer Achsrichtungen (linear) verfahrbar sein und die Z-Achse und/oder der Bearbeitungskopf können zumindest eine Rotationsachse aufweisen (rotierbar sein), was mittels einer integrierten C-Achse realisiert sein kann. Eine Rotationsachse des Bearbeitungskopfes kann z.B. dadurch bereitgestellt werden, dass der Bearbeitungskopf relativ zur Z-Achse rotierbar gelagert sein kann. Ferner kann auch ein Motordirektantrieb in dem Bearbeitungskopf vorgesehen sein, um ein direktes Antreiben/Rotieren des Bearbeitungskopfes zu ermöglichen. Eine Integration der C-Achse in die Z-Achse erlaubt es, dass auch Bearbeitungsköpfe, in die eine C-Achse schwierig integrierbar ist, rotiert werden können.

Ferner kann die Werkzeugmaschine eingerichtet sein, Bearbeitungsmuster derart abzuarbeiten bzw. herzustellen, dass der Bearbeitungskopf auf eine Position des Bearbeitungsmusters/Bohrmusters durch ein lineares Verfahren der Z-Achse verfahren werden kann. Das Verfahren erfolgt bevorzugt entlang zumindest einer der linearen Achsrichtungen. Die Werkzeuge des Bearbeitungskopfes können zu einer Kontur des Bearbeitungsmusters/Bohrmusters ausgerichtet werden. Dazu kann der Bearbeitungskopf und/oder die Z-Achse (mittels der C-Achse) rotiert werden.

Bevorzugt können mit der Werkzeugmaschine Bohrmuster hergestellt bzw. abgearbeitet werden. Ganz besonders bevorzugt sind die Bohrmuster Radien/Kreisabschnitte oder noch bevorzugter (ganze) Lochkreise. Die Bohrmuster können eine Vielzahl von Bohrungen auf einer Kontur des Bohrmusters aufweisen. Beispielsweise kann die Kontur des Bohrmusters im Falle eines Kreisabschnittes oder eines Lochkreises ein Durchmesser bzw. Außendurchmesser des Lochkreises sein, wobei die Bohrungen beabstandet zueinander entlang/auf dem Durchmesser angeordnet sein können.

Mit anderen Worten kann die Werkzeugmaschine dazu eingerichtet sein, Bohrungen entlang eines Lochkreis dadurch erstellen/herstellen zu können, dass der Bearbeitungskopf auf eine Position auf dem Lochkreis durch ein lineares Verfahren der Z-Achse entlang der linearen Achsrichtungen verfahrbar sein kann. Die Werkzeuge des Bearbeitungskopfes können zu dem Lochkreis mittels eines Rotierens des Bearbeitungskopfes und/oder der Z-Achse ausrichtbar sein.

Die Position des Bohrmusters, bspw. auf dem Lochkreis, kann bspw. mittels der (X-, Y-)Koordinaten der Bearbeitungskopfposition bestimmt sein. Im Falle eines Lochkreises kann es bspw. Bearbeitungsziel sein, Löcher an den Positionen des/auf dem Lochkreis(es) anzufertigen, die z.B. bei 0°, 90°, 180° und 270° des Lochkreises liegen. Dazu kann der Bohrkopf (linear) jeweils an die vorgenannten Positionen verfahren werden. Das Bohren kann bspw. durch ein (lineares) Verfahren des Bohrkopfes und/oder der Z-Achse in Z-Richtung erfolgen.

Unter dem Ausrichten der Werkzeuge sei insbesondere zu verstehen, dass, bevorzugt nachdem der Bearbeitungskopf in Position gefahren wurde, die Werkzeuge mit dem Bohrmuster, dessen Kontur bzw. dem Durchmesser (im Falle eines Lochkreises) übereinstimmend positioniert werden, d.h. ausgerichtet werden, so dass die Bohrungen auch tatsächlich auf der Kontur, z.B. dem Durchmesser, angeordnet sind.

Mit anderen Worten kann die Werkzeugmaschine schnell und hochgenau mittels zumindest zweier kartesische Maschinenachsen und einer rotativen Achse positioniert werden. Die rotative Achse kann Bestandteil der (Werkzeug-)Maschine und/oder (bevorzugt oder) des (Bearbeitungs-)Kopfes sein.

Technische Vorteile sind somit, dass sich wirtschaftlich, effizient und schneller insbesondere kreisförmig angeordnete Bohrmuster (aber auch lineare), bevorzugt Lochkreise, mit Mehrspindelbohrköpfen herstellen bzw. abarbeiten lassen, während bis dato lediglich linear angeordnete Bearbeitungsmuster abarbeitbar waren.

Ferner ist der Abstand der Werkzeugspindeln zueinander veränderbar, so dass z.B. unterschiedliche Bohrungsabstände innerhalb eines Bohrmusters ohne Kopfwechsel möglich sind, was eine sehr schnelle und effiziente Bearbeitung ermöglicht.

Ferner kann die Werkzeugmaschine zumindest zwei Werkzeugspindeln an zumindest einem Exzenter angeordnet aufweisen. Besonders bevorzugt ist jeweils einer Werkzeugspindel ein Exzenter zugeordnet. Andere Anordnungen sind jedoch möglich. Die Exzenter können bevorzugt über einen Motor positioniert werden.

Die Exzenter können mit dem Bearbeitungskopf verbunden sein und eine Relativposition, insbesondere ein Abstand zwischen den Werkzeugspindeln, zwischen den Werkzeugspindeln kann durch ein Rotieren der Exzenter einstellbar sein.

Die Verwendung von/die Konfiguration mit Exzentern erlaubt es besonders vorteilhaft, dass weniger komplex ein Antreiben/Rotieren (z.B. der Werkzeuge) mittels einer Hauptarbeitsspindel der Maschine über Zahnräder ermöglicht wird bzw. ein Verbinden über Zahnräder mit der Hauptarbeitsspindel der Maschine möglich ist.

Die Relativposition kann jedoch alternativ oder zusätzlich so verstellbar sein, dass die Werkzeugspindeln bzw. die Werkzeuge nicht auf einer horizontalen Linie angeordnet sind, sondern bspw. auf einer gekrümmten Linie oder einer geraden geneigten Linie.

Das Einstellen der Anordnung bzw. Relativposition der Werkzeuge zueinander erlaubt es, dass z.B. variable Abstände zwischen den Bohrungen eines Bohrmusters herstellbar sind. Ferner kann durch ein Drehen der Rotationsachse der Spindelabstand verstellt werden, um z.B. mehrere Nuten linear zu fräsen.

Ferner kann die Werkzeugmaschine die zumindest zwei Werkzeugspindeln aufweisen, die mit nichtverstellbarem (festem) Abstand zueinander an dem Bearbeitungskopf angeordnet sein können. Dadurch wird der Bearbeitungskopf weniger komplex und kostengünstiger; es lassen sich mit Hilfe der oben beschriebenen Maschinenachsen weiterhin kreisförmig angeordnete Bearbeitungsmuster schnell und effizient bearbeiten, wobei der Abstand und die Teilung der Bohrungsmuster fest definiert sind.

Ferner kann Werkzeugmaschine zumindest drei Werkzeugspindeln mit nichtverstellbarem Abstand zueinander an dem Bearbeitungskopf angeordnet aufweisen, wobei die Werkzeugspindeln auf einer Gerade angeordnet sein können oder auf einer gekrümmten Linie. Die gekrümmte Linie kann beispielsweise ein Radius sein/haben, der einem vorgegebenen Lochmuster entsprechen kann. Die Anordnung von vielen Werkzeugen auf dem Bearbeitungskopf erlaubt eine noch schnellere Bearbeitung. Die Vorgabe eines Radius', auf dem die Werkzeuge angeordnet sind, reduziert die Zeit für das Einstellen von Abständen und Ausrichtung der Werkzeuge bei vordefinierten Bohrmustern.

Ferner kann die Werkzeugmaschine so eingerichtet sein, dass zumindest zwei Werkzeugspindeln an zumindest zwei Linearführungen angeordnet sein können, die mit dem Bearbeitungskopf verbunden sein können. Ein Abstand zwischen den Werkzeugspindeln kann durch ein lineares Verfahren der Werkzeugspindeln mittels der Linearführungen einstellbar sein.

Die Verstellung der Bearbeitungsspindeln bzw. deren Relativposition, entweder rotativ (z.B. mittels Exzenter) oder linear in Kombination mit den vorbeschriebenen Maschinenachsen, erlaubt es, beliebige lineare und kreisförmig angeordnete Bohrungsmuster mehrspindlig schnell und kosteneffizient abzuarbeiten, insbesondere können dabei auch die Lochabstände bei jedem oder ausgewählten Bearbeitungsschritt(en) variiert werden.

Die Relativposition bzw. der Abstand zwischen den Werkzeugspindeln kann sowohl manuell als auch numerisch gesteuert (selbsttätig und/oder automatisch) verstellbar sein. Insbesondere die letztgenannte Möglichkeit bietet den Vorteil, dass eine weitere Reduktion der Bearbeitungszeiten realisiert werden kann.

Ferner kann der Bearbeitungskopf und/oder das/die Werkzeug(e) manuell wechselbar und/oder automatisch/selbsttätig wechselbar sein. Bevorzugt wird bei dem automatischen Wechseln ein Pickup-Verfahren. Dieses zeichnet sich dadurch aus, dass die Z-Achse bzw. der Bearbeitungskopf (mit/ohne Z-Achse) an eine Ablagestation für Bearbeitungsköpfe bzw. an ein Pickupmagazin für Werkzeuge automatisch verfahren werden kann. Dort kann der Bearbeitungskopf automatisiert gelöst und abgelegt werden. Dort kann das Werkzeug automatisiert gelöst und abgelegt werden. Danach kann ein anderer Bearbeitungskopf/ein anderes Werkzeug automatisiert eingesetzt werden. Die Bearbeitung von Bohrmustern kann somit vollautomatisiert stattfinden.

Ferner kann der Bearbeitungskopf zumindest eine zweite Rotationsachse aufweisen. Die zweite Rotationsachse erlaubt es, zusätzlich zur ersten Rotationsachse zu drehen bzw. zu schwenken, so dass auch weitere Bearbeitungsseiten an einem Werkstück bearbeitet werden können. Beispielsweise erlaubt die zweite Rotationsachse, dass von einer senkrechten Bearbeitung auf eine 90° versetzte/verschwenkte Bearbeitung automatisiert/manuell gewechselt werden kann.

Ferner kann die Werkzeugmaschine einen automatischen Werkzeugwechsler (Doppelgreiferkopf) aufweisen, der zumindest zwei Aufnahmen/Greifer für Werkzeuge aufweist, so dass ein automatisiertes Wechseln von Werkzeugen, z.B. im Verbund mit einem Kettenmagazin oder dgl., ermöglicht wird.

Die Werkzeugspindeln können eine innere Schmiermittelzufuhr aufweisen, so dass eine optimale Zufuhr von Schmiermittel ohne die Bearbeitung störende externe Schmiermittelzufuhren ermöglicht wird.

Erfindungsgemäß wird hier ein Verfahren zum (mehrspindligen) Herstellen von linearen und/oder kreisförmig angeordneten Bearbeitungsmustern mit einer Werkzeugmaschine beschrieben. Erfindungsgemäß wird für das Verfahren auf eine Werkzeugmaschine, wie oben (vor-)beschrieben, zurückgegriffen/verwendet.

Das Verfahren weist die Schritte (in beliebiger Reihenfolge, bevorzugt aber in der nachfolgend angeführten) auf: Anfahren einer Position auf dem/des Bearbeitungsmuster(s) mit dem Bearbeitungskopf mittels eines linearen Verfahrens der Z-Achse entlang einer, zweier (oder mehr) linearer Achsenrichtungen. (Hier ist gemeint, dass nicht bei jedem Verfahren immer ein Verfahren z.B. in X- und Y-Achsenrichtung notwendig sein muss, dies aber möglich ist. Es kann ggf. auch zum Anfahren einer Position möglich sein, dass nur ein Verfahren in X- oder Y-Achsenrichtung ausreicht). Anordnen der Werkzeuge des Bearbeitungskopfes auf einer Konturlinie des Bearbeitungsmusters, bspw. dem Außendurchmesser des Lochkreises, durch ein Rotieren des Bearbeitungskopfes und/oder der Z-Achse. Mit anderen Worten werden die Werkzeuge und das Bearbeitungsmuster zueinander ausgerichtet. Im Falle eines Bohrmusters kann ferner noch das Bohren der Bohrungen ausgeführt werden.

Technische Vorteile sind somit, dass sich wirtschaftlich, effizient und schneller insbesondere kreisförmig angeordnete Bohrmuster (aber auch lineare), bevorzugt Lochkreise, mit Mehrspindelbohrköpfen automatisiert herstellen bzw. abarbeiten lassen, während bis dato lediglich linear angeordnete Bearbeitungsmuster abarbeitbar waren.

Ferner fasst das Verfahren den Schritt um: Verstellen der Relativposition, insbesondere des Abstandes zwischen den Werkzeugspindeln, vor dem Abarbeiten des Bearbeitungsmusters, insbesondere des Lochmusters. Ferner kann zusätzlich oder alternativ vor jedem oder vor vorbestimmten Bohrvorgäng(en) eine solche Verstellung durchgeführt werden. Damit kann sehr flexibel und automatisiert (aber auch manuell) eine Anpassung der Anordnung der Werkzeuge auf das Bohrmuster erfolgen.

Ferner kann das Verfahren den Schritt umfassen: Bohren mittels Verfahren der Z-Achse und/oder des Bearbeitungskopfes in einer linearen Achsrichtung (senkrechte Achse), die senkrecht auf einer Ebene steht, die von den weiteren linearen Achsrichtungen aufgespannt wird.

Ferner kann das Verfahren den Schritt umfassen: Selbsttätiges Wechselns des Bearbeitungskopfes und/oder des Werkzeuges mittels Pickup-Verfahren, das oben bereits beschrieben wurde. Das selbsttätige Wechseln, z.B. mittels Pickup-Verfahren, wobei auch andere Verfahren möglich sind, erlaubt eine weitere Automatisierung und somit Beschleunigung der Abarbeitung eines Bearbeitungsmusters.

Ferner kann das Verfahren ein selbsttätiges Wechselns des Werkzeuges mittels eines automatischen Werkzeugwechslers umfassen. Der automatische Werkzeugwechsler ist bevorzugt ein Werkzeugwechsler wie er für Einspindelbearbeitungsköpfe bereits verwendet wird. Die Schritte zum Wechseln können in der nachfolgenden Reihenfolge bevorzugt ausgeführt werden. Die Reihenfolge ist jedoch auch abänderbar. Die Schritte können umfassen: Anordnen oder Entnehmen eines ersten Werkzeuges an/von der zugehörigen Werkzeugspindel mittels des automatischen Werkzeugwechslers. (Lineares) Verfahren der Z-Achse, bevorzugt entlang der Y-Richtung, auf eine Position, in der der Werkzeugwechsler ein zweites Werkzeug einsetzen oder entnehmen kann. Die Position, die angefahren wird, ist somit bevorzugt die Position, an der eine (Mittel-)Achse der Aufnahme des Werkzeugwechslers kongruent mit der Längsachse des Werkzeuges oder der Werkzeugspindel ist. Die Position kann auch so beschrieben werden, dass die Aufnahme so oberhalb (bei einer Draufsicht auf den Werkzeugwechsler) der Werkzeugspindel angeordnet ist, dass beide im Wesentlichen genau übereinander liegen. Ferner der Schritt: Anordnen oder Entnehmen des zweiten Werkzeuges an/von der zugehörigen Werkzeugspindel mittels dem automatischen Werkzeugwechsler.

Weitere Schritte sind möglich. So kann vor, zwischen und/oder nach den oben genannten Schritten bspw. der Werkzeugwechsler zu einem Magazin, z.B. einem Kettenmagazin fahren, um bspw. neue Werkzeuge aufzunehmen oder ausgewechselte Werkzeuge abzuladen.

Technische Vorteile des oben beschriebenen Wechselns umfassen, dass bekannte Werkzeugwechsler von Einspindelbeabeitungsköpfen verwendet werden können, wobei das Austauschen oder Bestücken der Werkzeuge des Merhspindelbearbeitungskopfes im Wesentlichen schnell und wenig komplex durch ein Verfahren der Z-Achse ermöglicht wird. Da die Werkzeugwechsler regelmäßig zwei Aufnahmen (Greifer) aufweisen, können insbesondere bei Bearbeitungsköpfen mit mehr als zwei Werkzeugspindeln Zwischenschritte bezüglich des Ablegens und/oder neu Aufnehmens von Werkzeugen in dem Magazin herangezogen werden. Zusammenfassend lässt sich das Bestücken und Austauschen von Werkzeugen somit mit vorhandenen Werkzeugwechslern auch bei Mehrspindelbearbeitungsköpfen schnell und flexibel durchführen.

Alternativ oder zusätzlich zu dem vorgenannten Schritten für ein selbsttätiges Wechselns des Werkzeuges mittels eines automatischen Werkzeugwechslers, kann können auch folgende Schritte (in der bevorzugten Reihenfolge wie unten angegeben oder in einer anderen Reihenfolge) vorhanden sein: Anordnen oder Entnehmen eines ersten Werkzeuges an/von der zugehörigen Werkzeugspindel mittels des automatischen Werkzeugwechslers. Rotieren der Z-Achse und/oder des Bearbeitungskopfes auf eine Position, in der der Werkzeugwechsler ein zweites Werkzeug einsetzen oder entnehmen kann. Die Rotation ist somit bevorzugt 180°, damit die Position der Werkzeugspindel wieder mit der Position der Aufnahme des Werkzeugwechslers übereinstimmt. Anordnen oder Entnehmen des zweiten Werkzeuges an/von der zugehörigen Werkzeugspindel mittels des automatischen Werkzeugwechslers.

Weitere Schritte sind möglich. So kann vor, zwischen und/oder nach den oben genannten Schritten bspw. der Werkzeugwechsler zu einem Magazin, z.B. einem Kettenmagazin fahren, um bspw. neue Werkzeuge aufzunehmen oder ausgewechselte Werkzeuge abzuladen.

Technische Vorteile des oben beschriebenen Wechselns umfassen auch hier, dass bekannte Werkzeugwechsler von Einspindelbeabeitungsköpfen verwendet werden können. Da die Werkzeugwechsler regelmäßig zwei Aufnahmen aufweisen, können insbesondere bei Bearbeitungsköpfen mit mehr als zwei Werkzeugspindeln Zwischenschritte bezüglich des Ablegens und/oder neu Aufnehmens von Werkzeugen in dem Magazin herangezogen werden. Zusammenfassend lässt sich das Bestücken und Austauschen von Werkzeugen somit mit vorhandenen Werkzeugwechslern auch bei Mehrspindelbearbeitungsköpfen schnell und flexibel durchführen.

Zusammenfassend wird damit ein mehrspindliges Abarbeiten, insbesondere, von großen Lochkreisen in minimierter Bearbeitungszeit ermöglicht, wobei auch ein schnelles und effizientes Wechseln der Werkzeuge realisiert werden kann.

Die hier dargelegte Vorrichtung und das dazugehörige werden im Folgenden exemplarisch mit Bezug auf die beigefügten, schematischen Zeichnungen beschrieben. Es zeigen
- Fig. 1: einen Abschnitt einer CNC-Werkzeugmaschine,
- Fig. 2: eine Vorderansicht eines Bearbeitungskopfes der CNC-Werkzeugmaschine,
- Fig. 3: ein Beispiel eines Bearbeitungsmusters,
- Figs. 4a-d: Ansichten eines Abschnittes einer CNC-Werkzeugmaschine,
- Fig. 5: ein weiteres Beispiel eines Bearbeitungsmusters,
- Figs. 6a-b: Ansichten eines Abschnittes einer CNC-Werkzeugmaschine,
- Figs. 7a-c: Ansichten einer Ablagestation für Bearbeitungsköpfe,
- Figs. 8a-c: Ansichten eines Magazins für Werkzeuge,
- Figs. 9a-b: Ansichten zu einem Wechselvorgang, und
- Figs. 10a-b: Ansichten eines Abschnittes einer CNC-Werkzeugmaschine.

Im Folgenden werden verschiedene Beispiele detailliert und unter Bezugnahme auf die Figuren beschrieben. Gleiche bzw. ähnliche Elemente in den Figuren werden hierbei mit gleichen Bezugszeichen bezeichnet. Die vorliegende Vorrichtung und das Verfahren sind jedoch nicht auf die beschriebenen Kombinationen von Merkmalen begrenzt. Vielmehr sollen auch weitere Modifikationen und Kombinationen von Merkmalen verschiedener Beispiele im Rahmen des Schutzumfangs des unabhängigen Anspruchs umfasst sein.

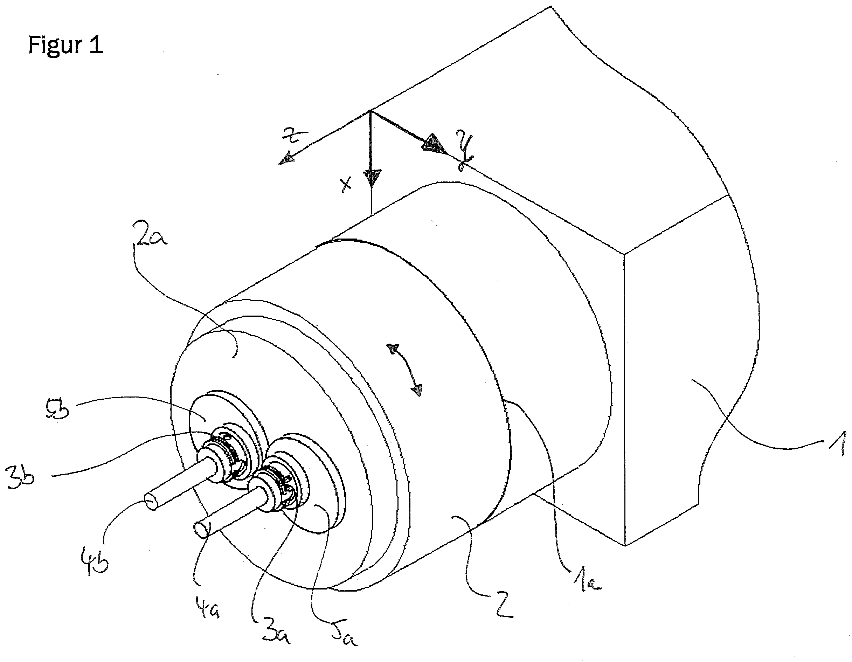

Figur 1 zeigt einen Teil der hier beschriebenen Werkzeugmaschine, insbesondere zeigt die Figur (abgeschnitten) einen Teil einer Z-Achse 1 die linear zumindest entlang der eingezeichneten linearen Achsrichtungen X und Y verfahrbar ist. Weiterhin wird bevorzugt auch eine Achsenverfahrbarkeit in Z-Richtung eingerichtet sein.

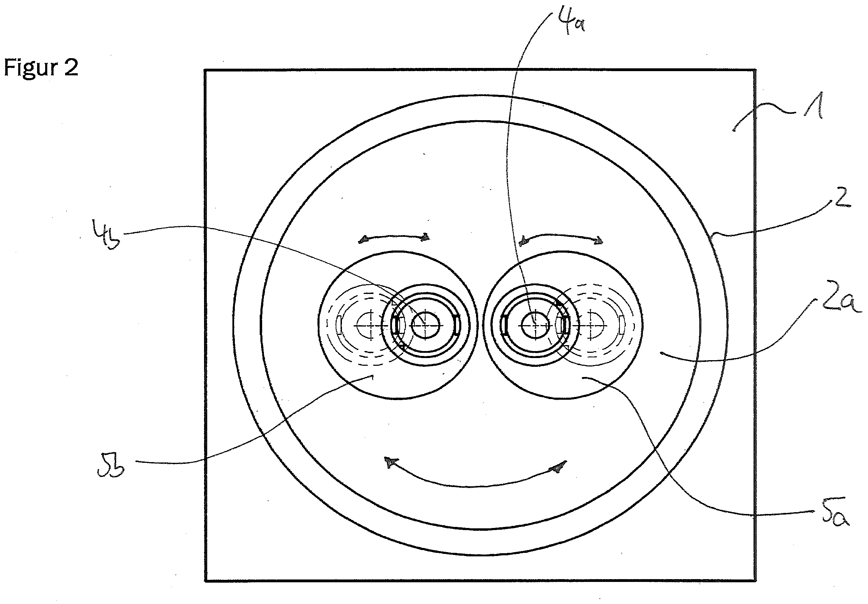

Die Z-Achse 1 weist eine Schnittstelle 1a auf, an der ein Bearbeitungskopf 2 wechselbar/lösbar angeordnet ist. Der Bearbeitungskopf 2 weist zumindest einen rotativen Freiheitsgrad auf, der mittels dem eingezeichnetem Doppelpfeil angedeutet wird. Dieser kann über eine Rotationsachse des Bearbeitungskopfes 2 und/oder der Z-Achse 1 bereitgestellt sein. Die Figur 2 zeigt beispielhaft eine stufenlose Verschwenkbarkeit bzw. Rotierbarkeit des Bearbeitungskopfes 2 relativ zu der Z-Achse 1, die der größere der drei Doppelpfeile andeutet.

Figur 2 zeigt ferner, dass an einer Vorderseite 2a des Bearbeitungskopfs 2 zwei Werkzeugspindeln 3 angeordnet sind, die jeweils ein Werkzeug 4, hier Bohrwerkzeuge 4a, 4b, rotierbar und wechselbar halten. Die beiden kleineren Doppelpfeile zeigen eine Rotierbarkeit der beiden Werkzeugspindeln 3 an, die es ermöglicht deren Relativposition zu verändern, wie mittels der gestrichelten Teile der Zeichnung beispielhaft angedeutet wird.

Figur 1 zeigt zudem, dass die beiden Werkzeuge 4a, 4b bzw. deren Werkzeugspindeln 3 jeweils auf einem Exzenter 5a, 5b angeordnet sind. Wie bereits bemerkt, zeigt Figur 2 zeigt eine Vorderansicht des Bearbeitungskopfes 2, die sowohl die stufenlose 360° Rotierbarkeit/Verschwenkbarkeit des Bearbeitungskopfes 2 bzw. der Z-Achse 1 als auch die Einstellbarkeit der Relativposition der Werkzeuge 4a, 4b durch ein Rotieren der Exzenter 5a, 5b mittels Doppelpfeilen darstellt.

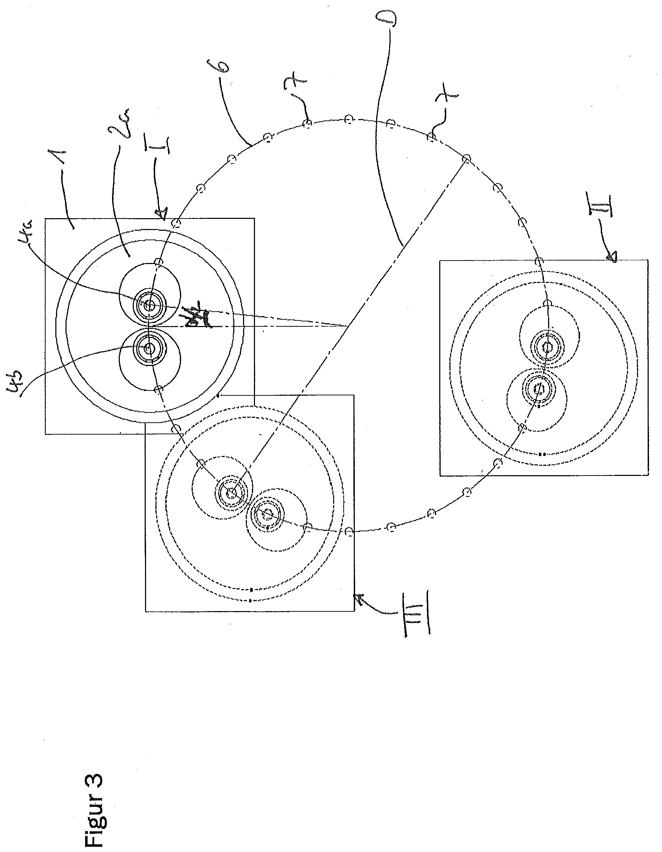

Figur 3 zeigt ein Beispiel für die Bearbeitung eines Lochkreises 6 als Bearbeitungsmuster. Die römischen Zahlen I-III geben Positionen an, auf die die Z-Achse 1 mit dem Bearbeitungskopf 2 zeitlich versetzt verfahren wird (gekennzeichnet durch gestrichelte Konturen), um jeweils Bohrungen 7 an dieser Position auf/entlang des Lochkreises 6 auszuführen/zu bohren. Der Radius bzw. Durchmesser D des Lochkreises 6 ist dabei beliebig, bevorzugt jedoch relativ groß, z.B. kann der Durchmesser einen halben Meter, einen Meter, mehr als einen Meter/mehrere Meter umfassen. Das Kreismuster bzw. das gekrümmte Bearbeitungsmuster kann ebenfalls beliebig sein. Die Winkelteilung α bzw. α/2 und/oder Abstände zwischen den Bohrungen 7 kann stufenlos gewählt werden. Die Positionen I-III werden präzise von der Werkzeugmaschine bzw. der Z-Achse 1 angefahren, indem die Z-Achse 1 entlang der X- und/oder Y-Richtung entsprechend verfahren wird bis die gewünschte Position erreicht ist.

Bevorzugt nach dem Anfahren der Position, z.B. I, II oder III (mehr oder weniger Positionen sind möglich), wird der Bearbeitungskopf 2 gedreht/verschwenkt. Dazu wird entweder die Z-Achse 1 (falls diese eine/als C-Achse aufweist/ausgebildet ist) stufenlos rotiert und/oder der Bearbeitungskopf 2 selbst wird relativ zur Z-Achse 1 gedreht. Alternativ ist es auch möglich, dass die Rotation vor dem Anfahren der (Bearbeitungs-)Position I-III durchgeführt wird. Die Rotation wird so ausgeführt und dient dazu, die Werkzeuge 4a, 4b derart auszurichten, dass die zu bohrenden Bohrungen 7 auch tatsächlich auf dem Lochkreis 6 angeordnet sind, wie dies die Figur 3 anhand der leeren Punkte auf dem Außendurchmesser des Lochkreises 6 darstellt.

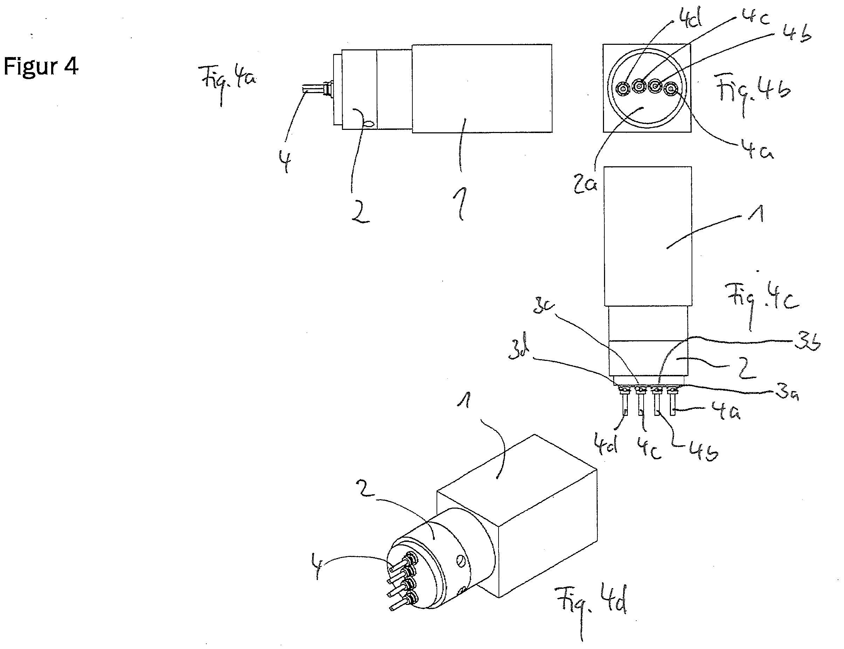

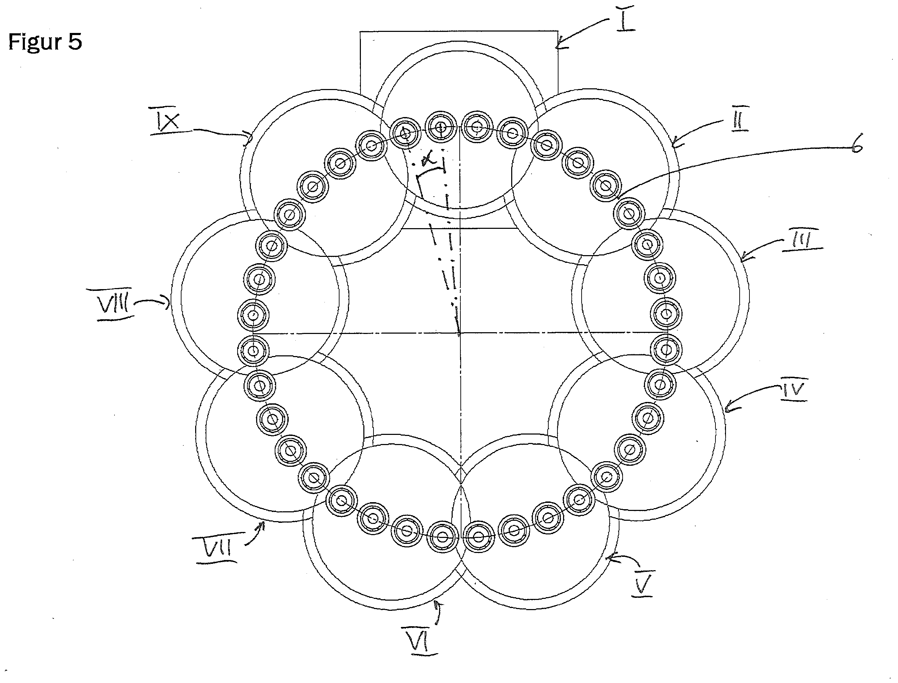

Eine Alternative zu dem oben beschriebenen Beispiel geben die Figuren 4a-d wieder. Hier wird beispielhaft ein Bearbeitungskopf 2 gezeigt, der vier Werkzeugspindeln 3a-d und Werkzeuge 4a-d aufweist. Die Werkzeugspindeln 3 sind in diesem Beispiel mit fixiertem (unveränderbaren) Abstand und Anordnung zueinander mit dem Bearbeitungskopf 2 verbunden. Zudem sind die Werkzeuge 4 auf einer gekrümmten Linie zueinander angeordnet, wie insbesondere die Teilfigur 4b gut sichtbar macht, so dass das Bohren eines festen durch die Form der gekrümmten Linie vorbestimmten Winkels α ermöglicht wird, wie die Figur 5 anhand eines weiteren Bearbeitungsmusters/Lochkreises 6 zeigt. Die weiteren Merkmale dieses Beispiels der Figuren 4a-d können den bereits im Zusammenhang mit den Figuren 1-3 beschriebenem Beispiel(en) entsprechen.

Die Figur 5 zeigt, wie oben erläutert, einen weiteren Lochkreis 6, der die Bearbeitungspositionen I-IX umfasst, wobei an jeder Position vier Bohrungen 7 mittels des vorbeschriebenen Bearbeitungskopfes 2 mit einem einzelnen Bohrschritt ausgeführt werden. Wiederrum wird jede Position I-IX mittels translatorischem Verfahrens der Z-Achse 1 angefahren. Ferner wird ein Rotieren durchgeführt, das die Werkzeuge 4 zu dem Lochkreis 6 ausrichtet.

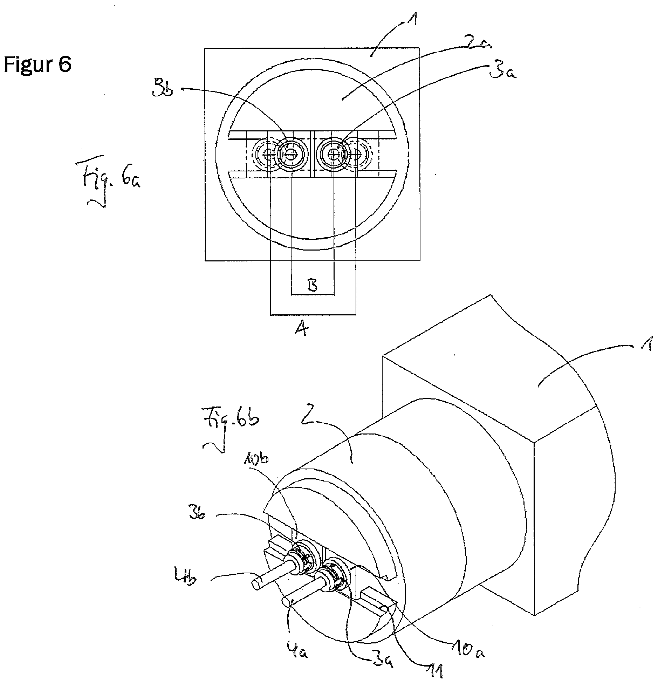

Figuren 6a-b zeigen ferner ein weiteres Beispiel, das sich von den oben beschriebenen insbesondere insofern unterscheidet, dass die Werkzeugspindeln 3 jeweils auf einer translatorischen Verfahreinrichtung 10 (Linearführung) angeordnet sind, die z.B. entlang einer Schiene 11 des Bearbeitungskopfes 2, linear so verschoben/verfahren (automatisiert oder manuell) werden können, dass der Abstand zwischen den beiden gezeigten Werkzeugspindeln 3a, 3b gezielt und genau einstellbar ist.

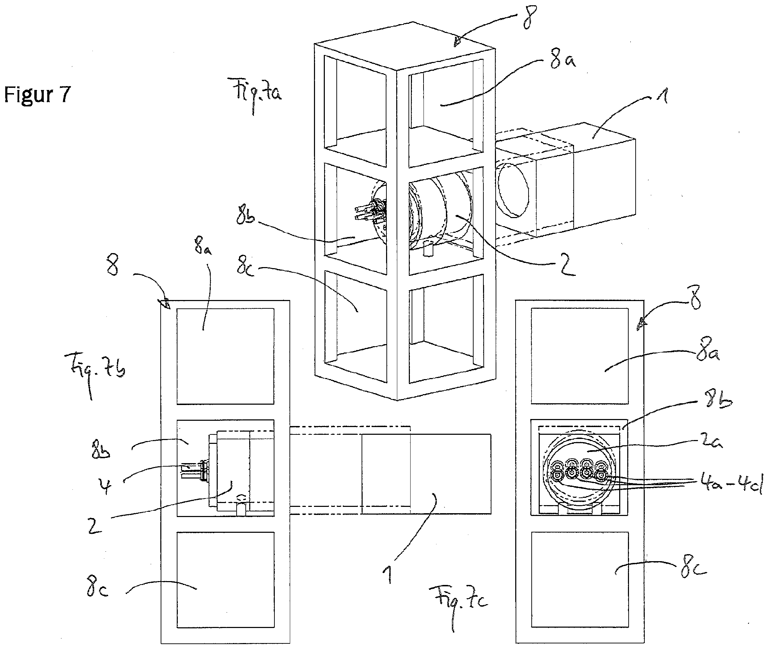

Weiterhin zeigen die Figur 7a-c schematisch eine (Pickup-)Ablagestation 8, die eine Vielzahl Fächer 8a-c aufweist, in die jeweils zumindest ein Bearbeitungskopf 2 eingelegt werden kann. Soll ein Bearbeitungskopf 2 (automatisiert) gewechselt werden, so wird die Z-Achse 1 an ein Fach 8a-c verfahren, dort wird wie bekannt der Bearbeitungskopf 2 von der Z-Achse 1 gelöst und abgelegt. Danach wird die Z-Achse 1 an ein anderes Fach 8a-c verfahren, in dem ein anderer, gewünschter Bearbeitungskopf 2 abgelegt ist. Dieser wird dann wie bekannt an der Z-Achse 1 automatisiert/selbsttätig montiert. Danach kann die Z-Achse 1 wieder zu dem Werkstück verfahren werden.

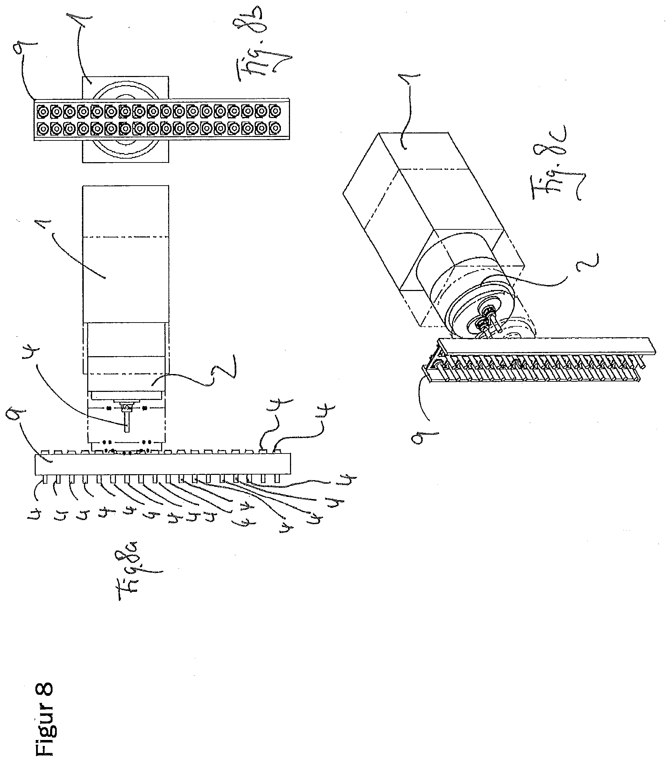

Weiterhin zeigen die Figur 8a-c schematisch ein (Pickup-)Werkzeugmagazin 9. Werkzeugmagazin 9 hält in unterschiedlichen Positionen eine Vielzahl verschiedener Werkzeuge 4, die automatisiert/selbsttätig mit einer Werkzeugspindel 3 eines Bearbeitungskopfes 2 verbunden werden können. Dazu wird die Z-Achse 1 zu dem Werkzeugmagazin 9 verfahren, eingespannte Werkzeuge 4 werden gelöst und abgelegt und andere Werkzeuge 4, wie bekannt, eingespannt. Der Wechsel von Bearbeitungsköpfen 2 und/oder Werkzeugen 4 kann auch manuell erfolgen. Zudem kann das (Pickup-)Werkzeugmagazin 9 alternativ oder zusätzlich auch Werkzeugspindeln 3 vorrätig halten.

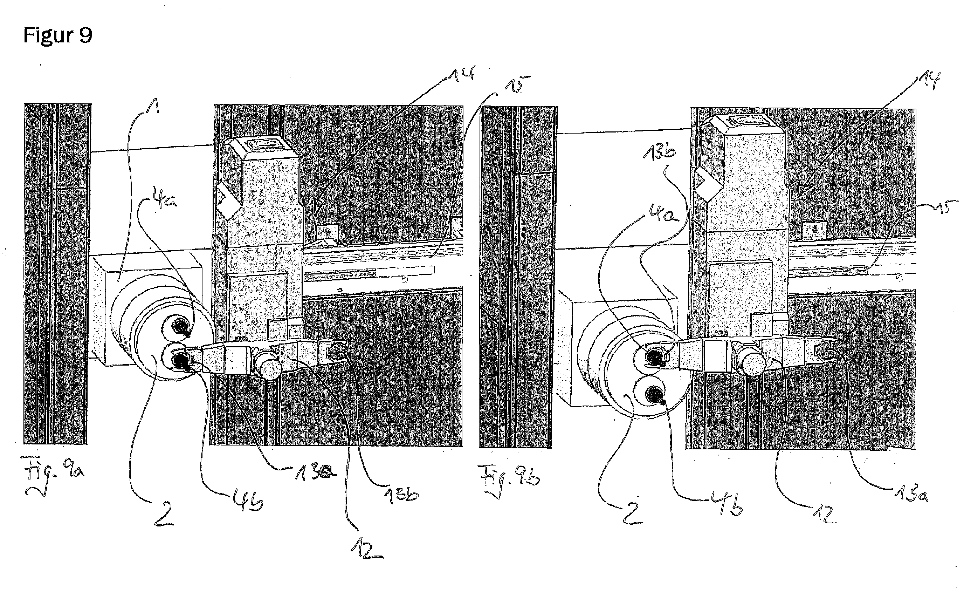

Die Figur 9a zeigt den Wechsel/das Einsetzen eines Werkzeuges 4b mittels einer automatischen Werkzeugwechslereinrichtung 14, die ein translatorisch und rotatorisch verfahrbaren (automatischen) Werkzeugwechsler 12 aufweist. Der Werkzeugwechsler (Doppelgreiferkopf) 12 hat jeweils an seinen Längsenden eine Aufnahme/einen Greifer 13a, 13b, mit dem Werkzeuge 4 gegriffen werden können, um diese aus einem Magazin zu entnehmen, in ein Magazin einzusetzen, aus der Werkzeugspindel 3 zu entnehmen, in die Werkzeugspindel 3 einzusetzen, etc. Das in den Figuren 9a und 9b gezeigte Verfahren zeigt ein beispielhaft ein Einsetzen/Wechseln der Werkzeuge 4a und 4b des Zweispindelbearbeitungskopfes 2. Das erste Werkzeug, z.B. mit Referenzzeichen 4b, kann demnach zunächst vom Greifer 13a gegriffen werden und z.B. eingesetzt oder entnommen (in/aus der Werkzeugspindel 3b) werden. Danach kann die Z-Achse 1 in den Figuren linear nach unten verfahren werden, bis der Greifer 13, z.B. nach einer 180°-Drehung des Werkzeugwechslers 12 der Greifer 13a), fluchtend mit der Werkzeugspindel 4a liegt, so dass das dortige Werkzeug 4a entnommen oder eingesetzt werden kann. Ferner kann es möglich sein, dass der Werkzeugwechsler 12 vor, nach oder zwischen den Einsetzt- oder Entnahmeschritten entlang der gezeigten Schiene 15 zum Magazin verfahren wird oder dgl. Ferner kann auch der Werkzeugwechsler 12 dazu verwendet werden, dass er zunächst ein Werkzeug 3 aus dem Werkzeugspindel 4 entnimmt, dann 180° rotiert, um ein bereits vorbereitetes Werkzeug 3 mit dem zweiten Greifer 13a, b einzusetzen. Danach kann der Werkzeugwechsler 12 zum Magazin verfahren, während die Z-Achse 1 in die Position linear verfahren werden kann, in der das zweite Werkzeug 3, wenn der Werkzeugwechsler vom Magazin zurückgekehrt ist, gewechselt werden kann (diese Position zeigt z.B. Fig. 9b).

Nicht gezeigt ist eine weitere Möglichkeit des Positionierens der Werkzeugspindel 4 zu dem Greifer 13, wobei statt (oder zusätzlich dazu) eines linearen Verfahrens der Z-Achse 1, eine Rotation dieser oder des Bearbeitungskopfes 2 um bevorzugt 180° durchgeführt wird, so dass das zweite Werkzeug 3 nach der Rotation wieder mit der Aufnahme/Greifer 13 fluchtend liegt.

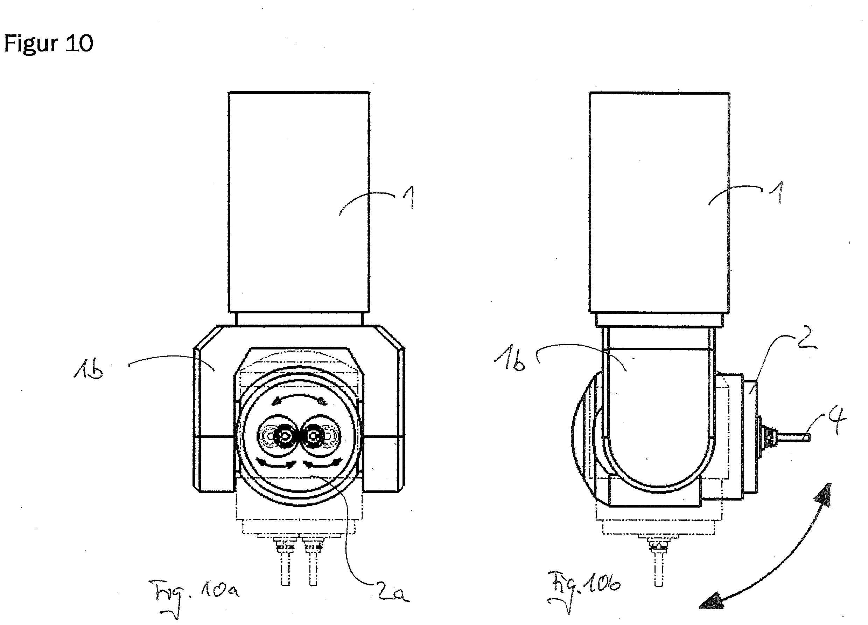

Die Figuren 10a, b zeigen ferner eine zweite Rotationsachse der Z-Achse 1, so dass das Element 1b rotiert werden kann, wie dies der Doppelpfeil in Fig. 10b insbesondere veranschaulicht. Die Rotation ist stufenlos möglich und zumindest in einem Winkelbereich von bis zu 90°. Der Bereich kann größer oder kleiner sein. Fig. 10a zeigt insbesondere, dass das Element 1b gabelförmig sein kann, um den Bearbeitungskopf 2 innerhalb der Gabel um die zweite Rotationsachse rotieren zu können.

Zusammenfassend hat das erfindungsgemäße Verfahren zum Abarbeiten von Bearbeitungsmustern (linear und bevorzugt gekrümmte Bearbeitungsmuster) den technischen Vorteil, dass auch für gekrümmte/radiale/kreisförmige Bearbeitungsmuster, wie z.B. Lochkreise 6, auf Mehrspindelbearbeitungsköpfe zurückgegriffen werden kann, was eine deutliche Reduktion der Bearbeitungszeit/Produktionszeit ermöglicht wird. Das Verfahren kann bevorzugt (fast) vollautomatisch durchgeführt werden, inklusive ggf. notwendiger automatischer und schneller Wechsel von Werkzeugen 4, Werkzeugspindeln 3 und/oder Bearbeitungsköpfen 2.

## Patentansprüche

1. Verfahren zum mehrspindligen Herstellen von linearen und/oder kreisförmig angeordnete Bearbeitungsmustern mit einer CNC-Werkzeugmaschine,
wobei die CNC-Werkzeugmaschine einen Bearbeitungskopf (2), der mit einer Z-Achse (1) manuell und/oder automatisch wechselbar verbunden ist und der zumindest zwei Werkzeugspindeln (3a - 3d) zur Aufnahme von Werkzeugen (4a - 4d) aufweist, umfasst,
wobei die Z-Achse (1) zumindest entlang zweier linearer Achsrichtungen verfahrbar, und die Z-Achse (1) und/oder der Bearbeitungskopf (2) zumindest eine Rotationsachse aufweisen, und wobei die CNC-Werkzeugmaschine derart eingerichtet ist, dass Bearbeitungsmuster dadurch abarbeitbar sind, dass der Bearbeitungskopf (2) auf eine Position des Bearbeitungsmusters durch ein lineares Verfahren der Z-Achse (1) entlang zumindest einer der linearen Achsrichtungen verfahrbar ist, und die Werkzeuge (4a - 4d) des Bearbeitungskopfes (2) zu einer Kontur des Bearbeitungsmuster mittels eines Rotierens des Bearbeitungskopfes (2) und/oder der Z-Achse (1) ausrichtbar sind;
das Verfahren **gekennzeichnet durch** die Schritte:
- Anfahren einer Position auf dem Bearbeitungsmuster mit dem Bearbeitungskopf (2) mittels eines linearen Verfahrens der Z-Achse (1) entlang einer oder mehrerer linearer Achsenrichtungen,
- Anordnen der Werkzeuge (4a - 4d) des Bearbeitungskopfes (2) entlang einer Konturlinie des Bearbeitungsmusters durch ein Rotieren des Bearbeitungskopfes (2) und/oder der Z-Achse (1),
- Verstellen des Abstandes zwischen den Werkzeugspindeln (3a - 3d) vor dem Abarbeiten des Bearbeitungsmusters und/oder vor jedem Bohrvorgang.

2. Verfahren gemäß Anspruch 1, **gekennzeichnet durch** einen Schritt des Bohrens durch ein Verfahren der Z-Achse (1) und/oder des Bearbeitungskopfes (2) in einer linearen Achsrichtung, die senkrecht auf einer Ebene steht, die von den weiteren linearen Achsrichtungen aufgespannt wird.

3. Verfahren gemäß einem der voranstehenden Ansprüche 1 und 2, **gekennzeichnet durch** den Schritt eines selbsttätigen Wechselns des Bearbeitungskopfes (2) und/oder Werkzeuges (4a - 4d) mittels Pickup-Verfahrens.

4. Verfahren gemäß einem der voranstehenden Ansprüche 1 bis 3, **gekennzeichnet durch** ein selbsttätiges Wechselns des Werkzeuges (4a - 4d) mittels eines automatischen Werkzeugwechslers (12), umfassend die Schritte:
- Anordnen oder Entnehmen eines ersten Werkzeuges (4a - 4d) an/von der zugehörigen Werkzeugspindel (3a - 3d) mittels des automatischen Werkzeugwechslers (12),
- lineares Verfahren der Z-Achse (1) auf eine Position, in der der Werkzeugwechsler (12) ein zweites Werkzeug (4a - 4d) einsetzen oder entnehmen kann, und
- Anordnen oder Entnehmen des zweiten Werkzeuges (4a - 4d) an/von der zugehörigen Werkzeugspindel (3a - 3d) mittels des automatischen Werkzeugwechslers (12).

5. Verfahren gemäß einem der voranstehenden Ansprüche 1 bis 3, **gekennzeichnet durch** ein selbsttätiges Wechselns des Werkzeuges (4a - 4d) mittels eines automatischen Werkzeugwechslers (12), umfassend die Schritte:
- Anordnen oder Entnehmen eines ersten Werkzeuges (4a - 4d) an/von der zugehörigen Werkzeugspindel (3a - 3d) mittels des automatischen Werkzeugwechslers (12),
- Rotieren der Z-Achse (1) und/oder des Bearbeitungskopfes (2) auf eine Position, in der der Werkzeugwechsler (12) ein zweites Werkzeug (4a - 4d) einsetzen oder entnehmen kann, und
- Anordnen oder Entnehmen des zweiten Werkzeuges (4a - 4d) an/von der zugehörigen Werkzeugspindel (3a - 3d) mittels des automatischen Werkzeugwechslers (12).

6. Verfahren gemäß Anspruch 1, wobei die zumindest zwei Werkzeugspindeln (3a - 3d) an zumindest einem Exzenter (5a, 5b) angeordnet sind, die mit dem Bearbeitungskopf (2) verbunden sind und eine Relativposition zwischen den Werkzeugspindeln (3a - 3d) durch ein Rotieren der Exzenter (5a, 5b) einstellbar ist.

7. Verfahren gemäß Anspruch 1, wobei zumindest zwei Werkzeugspindeln (3a - 3d) mit nichtverstellbarem Abstand zueinander an dem Bearbeitungskopf (2) angeordnet sind.

8. Verfahren gemäß Anspruch 1, wobei zumindest drei Werkzeugspindeln (3a -3d) mit nichtverstellbarem Abstand zueinander an dem Bearbeitungskopf (2) angeordnet sind, und wobei die Werkzeugspindeln (3a - 3d) auf einer Gerade angeordnet sind oder auf einer gekrümmten Linie.

9. Verfahren gemäß Anspruch 1, wobei die zumindest zwei Werkzeugspindeln (3a - 3d) an zumindest zwei Linearführungen (10a, 10b) angeordnet sind, die mit dem Bearbeitungskopf (2) verbunden sind und ein Abstand zwischen den Werkzeugspindeln (3a - 3d) durch ein lineares Verfahren der Werkzeugspindeln (3a - 3d) mittels der Linearführungen (10a, 10b) einstellbar ist.

10. Verfahren gemäß Anspruch 1, wobei der Abstand zwischen den Werkzeugspindeln (3a - 3d) manuell oder numerisch gesteuert (automatisch) verstellbar ist.

11. Verfahren gemäß Anspruch 1, wobei der Bearbeitungskopf (2) manuell wechselbar ist und/oder automatisch wechselbar ist.

12. Verfahren gemäß Anspruch 1, wobei der Bearbeitungskopf (2) automatisch mittels eines Pickup-Verfahrens wechselbar ist.

13. Verfahren gemäß Anspruch 1, wobei die Werkzeuge (4a - 4d) manuell und/oder automatisch, insbesondere mittels Pickup-Verfahren, wechselbar sind.

14. Verfahren gemäß Anspruch 1, wobei der Bearbeitungskopf (2) zumindest eine zweite Rotationsachse aufweist.

15. Verfahren gemäß Anspruch 1, wobei die Werkzeugmaschine einen automatischen Werkzeugwechsler (12) aufweist, der zumindest zwei Aufnahmen für Werkzeuge aufweist.

16. Verfahren gemäß Anspruch 1, wobei die Werkzeugspindeln (3a - 3d) eine innere Schmiermittelzufuhr aufweisen.

## Claims

1. A method for multi-spindled production of linearly and/or circularly arranged machining patterns with a CNC machine tool,
the CNC machine tool comprising a machining head (2) which is connected to a Z-axis (1) such that it is manually and/or automatically changeable and includes at least two tool spindles (3a-3d) for receiving tools (4a-4d),
wherein said Z-axis (1) is displaceable at least along two linear axial directions, and said Z-axis (1) and/or the machining head (2) have at least one rotational axis, and wherein the CNC machine tool is configured such that machining patterns are processable in that the machining head (2) is movable to a position of the machining pattern by linearly displacing said Z axis (1) along at least one of the linear axial directions, and the tools (4a-4d) of the machining head (2) can be aligned with a contour of the machining pattern by rotating the machining head (2) and/or the Z axis (1);
said method being **characterized by** the steps of:
- moving to a position on the machining pattern with the machining head (2) by linearly displacing said Z axis (1) along one or more linear axial directions,
- arranging the tools (4a-4d) of the machining head (2) along a contour line of the machining pattern by rotating the machining head (2) and/or the Z axis (1),
- adjusting the distance between the tool spindles (3a-3d) prior to processing the machining pattern and/or prior to each drilling operation.

2. The method according to claim 1, **characterized by** a step of drilling by means of displacing the Z-axis (1) and/or the machining head (2) in a linear axial direction which is perpendicular to a plane spanned by the other linear axial directions.

3. The method according to at least one of the preceding claims 1 and 2, **characterized by** the step of automatically changing the machining head (2) and/or tool (4a-4d) by means of a pick-up method.

4. The method according to at least one of the preceding claims 1 to 3, **characterized by** an automatic change of the tool (4a-4d) by means of an automatic tool changer (12), comprising the steps of:
- arranging or removing a first tool (4a-4d) on/from the associated tool spindle (3a-3d) by means of the automatic tool changer (12),
- linearly displacing the Z axis (1) to a position in which the tool changer (12) can insert or remove a second tool (4a-4d), and
- arranging or removing the second tool (4a-4d) on/from the associated tool spindle (3a-3d) by means of the automatic tool changer (12).

5. The method according to at least one of the preceding claims 1 to 3, **characterized by** an automatic change of the tool (4a-4d) by means of an automatic tool changer (12), comprising the steps of:
- arranging or removing a first tool (4a-4d) on/from the associated tool spindle (3a-3d) by means of the automatic tool changer (12),
- rotating the Z-axis (1) and/or the machining head (2) to a position in which the tool changer (12) can insert or remove a second tool (4a-4d), and
- arranging or removing the second tool (4a-4d) on/from the associated tool spindle (3a-3d) by means of the automatic tool changer (12).

6. The method according to claim 1, wherein the at least two tool spindles (3a-3d) are arranged on at least one eccentric (5a, 5b) connected to the machining head (2) and a relative position between the tool spindles (3a-3d) is adjustable by rotating said eccentric (5a, 5b).

7. The method according to claim 1, wherein at least two tool spindles (3a-3d) are arranged at a non-adjustable distance from one another on the machining head (2).

8. The method according to claim 1, wherein at least three tool spindles (3a - 3d) are arranged at a non-adjustable distance from one another on the machining head (2), said tool spindles (3a-3d) being arranged on a straight line or on a curved line.

9. The method according to claim 1, wherein the at least two tool spindles (3a-3d) are arranged on at least two linear guides (10a, 10b) connected to the machining head (2) and a distance between the tool spindles (3a-3d) is adjustable by linearly displacing the tool spindles (3a-3d) by means of the linear guides (10a, 10b).

10. The method according to claim 1, wherein the distance between the tool spindles (3a-3d) is adjustable in a manual or numerically controlled (automatic) manner.

11. The machine tool of claim 1, wherein said machining head (2) is manually and/or automatically changeable.

12. The machine tool of claim 1, wherein said machining head (2) is automatically changeable by means of a pick-up method.

13. The machine tool of claim 1, wherein said tools (4a-4d) are manually and/or automatically changeable, in particular by means of a pick-up method.

14. The machine tool of claim 1, wherein said machining head (2) has at least a second rotational axis.

15. The machine tool of claim 1, wherein said machine tool comprises an automatic tool changer (12) including at least two receptacles for tools.

16. The machine tool of claim 1, wherein said tool spindles (3a-3d) have an internal lubricant feed.

## Revendications

1. Procédé pour la réalisation multibroche de modèles d'usinage linéaires et/ou disposés en forme circulaire avec une machine-outil à commande numérique,
dans lequel
la machine-outil à commande numérique comprend une tête d'usinage (2) qui est reliée à un axe Z (1) de manière interchangeable manuellement et/ou automatiquement et qui comporte au moins deux broches porte-outils (3a - 3d) pour recevoir des outils (4a - 4d),
l'axe Z (1) peut être déplacé le long d'au moins deux directions d'axe linéaires et l'axe Z (1) et/ou la tête d'usinage (2) présente(nt) au moins un axe de rotation, et la machine-outil à commande numérique est configurée de telle sorte que les modèles d'usinage peuvent être exécutés du fait que la tête d'usinage (2) peut être déplacée vers une position du modèle d'usinage par un déplacement linéaire de l'axe Z (1) le long de l'une au moins des directions d'axe linéaires, et les outils (4a - 4d) de la tête d'usinage (2) peuvent être orientés par rapport à un contour du modèle d'usinage au moyen d'une rotation de la tête d'usinage (2) et/ou de l'axe Z (1) ;
le procédé étant **caractérisé par** les étapes consistant à :
- approcher d'une position sur le modèle d'usinage avec la tête d'usinage (2) au moyen d'un déplacement linéaire de l'axe Z (1) le long d'une ou de plusieurs directions d'axe linéaires,
- disposer les outils (4a - 4d) de la tête d'usinage (2) le long d'une ligne de contour du modèle d'usinage par une rotation de la tête d'usinage (2) et/ou de l'axe Z (1),
- régler la distance entre les broches porte-outils (3a - 3d) avant l'exécution du modèle d'usinage et/ou avant chaque opération de perçage.

2. Procédé selon la revendication 1,
**caractérisé par** une étape de perçage par déplacement de l'axe Z (1) et/ou de la tête d'usinage (2) dans une direction d'axe linéaire perpendiculaire à un plan défini par les autres directions d'axe linéaires.

3. Procédé selon l'une des revendications précédentes 1 et 2,
**caractérisé par** l'étape de changement automatique de la tête d'usinage (2) et/ou de l'outil (4a - 4d) au moyen d'une méthode automatique directe (dite Pick-up).

4. Procédé selon l'une des revendications précédentes 1 à 3,
**caractérisé par** un changement automatique de l'outil (4a - 4d) au moyen d'un changeur d'outils automatique (12), comprenant les étapes consistant à :
- agencer ou enlever un premier outil (4a - 4d) sur/de la broche porte-outils associée (3a - 3d) au moyen du changeur automatique d'outils (12),
- déplacer linéairement l'axe Z (1) vers une position dans laquelle le changeur d'outils (12) peut mettre en place ou enlever un second outil (4a - 4d), et
- agencer ou enlever le second outil (4a - 4d) sur/de la broche porte-outils associée (3a - 3d) au moyen du changeur automatique d'outils (12).

5. Procédé selon l'une des revendications précédentes 1 à 3,
**caractérisé par** un changement automatique de l'outil (4a - 4d) au moyen d'un changeur automatique d'outils (12), comprenant les étapes consistant à :
- agencer ou enlever un premier outil (4a - 4d) sur/de la broche porte-outils associée (3a - 3d) au moyen du changeur automatique d'outils (12),
- faire tourner l'axe Z (1) et/ou la tête d'usinage (2) vers une position dans laquelle le changeur d'outils (12) peut mettre en place ou enlever un second outil (4a - 4d), et
- agencer ou enlever le second outil (4a - 4d) sur/de la broche porte-outils associée (3a - 3d) au moyen du changeur automatique d'outils (12).

6. Procédé selon la revendication 1,
dans lequel
au moins deux broches porte-outils (3a - 3d) sont disposées sur au moins un excentrique (5a, 5b), les excentriques étant reliés à la tête d'usinage (2), et
une position relative entre les broches porte-outils (3a - 3d) est réglable par rotation des excentriques (5a, 5b).

7. Procédé selon la revendication 1,
dans lequel
au moins deux broches porte-outils (3a - 3d) sont disposées sur la tête d'usinage (2) à une distance non réglable l'une par rapport à l'autre.

8. Procédé selon la revendication 1,
dans lequel
au moins trois broches porte-outils (3a - 3d) sont disposées sur la tête d'usinage (2) à une distance non réglable les unes par rapport aux autres, et les broches porte-outils (3a - 3d) sont disposées sur une droite ou sur une ligne incurvée.

9. Procédé selon la revendication 1,
dans lequel
lesdites au moins deux broches porte-outils (3a - 3d) sont disposées sur deux guidages linéaires (10a, 10b) qui sont reliés à la tête d'usinage (2), et une distance entre les broches porte-outils (3a - 3d) est réglable par un déplacement linéaire des broches porte-outils (3a - 3d) au moyen des guidages linéaires (10a, 10b).

10. Procédé selon la revendication 1,
dans lequel
la distance entre les broches porte-outils (3a - 3d) est réglable manuellement ou à commande numérique (automatiquement).

11. Procédé selon la revendication 1,
dans lequel
la tête d'usinage (2) est interchangeable manuellement et/ou automatiquement.

12. Procédé selon la revendication 1,
dans lequel
la tête d'usinage (2) est interchangeable automatiquement par une méthode automatique directe (dite Pick-up).

13. Procédé selon la revendication 1,
dans lequel
les outils (4a - 4d) sont interchangeables manuellement et/ou automatiquement, en particulier par une méthode automatique directe (dite Pick-up).

14. Procédé selon la revendication 1,
dans lequel
la tête d'usinage (2) comprend au moins un second axe de rotation.

15. Procédé selon la revendication 1,
dans lequel
la machine-outil comprend un changeur automatique d'outils (12) qui présente au moins deux logements pour outils.

16. Procédé selon la revendication 1,
dans lequel
les broches porte-outils (3a - 3d) présentent une alimentation interne en lubrifiant.
